# EUROPEAN PATENT APPLICATION

(11) **EP 1 418 701 A1**
(43) Date of publication of application: **12.05.2004**
(21) Application number: 02257788.6
(22) Date of filing: 11.11.2002
(51) Int. Cl.: H04L 9/08, H04N 7/167

(54) **Transmission and storage of encryption keys**

(71) Applicant: STMicroelectronics, Ltd., Almondsbury, Bristol, BS32 4SQ (GB)
(72) Inventor: Dellow, Andrew Dellow, Minchinhampton, Glos., G16 9JG (GB); Cordero, Rodrigo, Bristol, BS5 6RH (GB)
(74) Representative: Loveless, Ian Mark

(57) **Abstract**

A semiconductor circuit for use in a system for receiving and decrypting broadcast signals such as pay television comprises an input and stores for receiving a decryption key in two portions named mother and daughter portion. The splitting of the key into two portions allows a common main or mother portion to be sent broadcast to a large number of subscribers and for separate daughter portions to be sent to each subscriber or group of subscribers depending upon, for example, entitlements for which the subscribers have paid. The semiconductor circuit is arranged to retrieve the mother portion and a relevant daughter portion to construct a complete decryption key.

## Description

### FIELD OF THE INVENTION

This invention relates to the storage of encryption keys and to methods of broadcasting encryption keys to multiple recipients, particularly in the field of pay television systems.

### BACKGROUND OF THE INVENTION

The use of encryption techniques in subscriber based systems is essential to prevent unauthorised access to broadcasts by parties who are not entitled to them. For example, a person may wish to gain access to a sports broadcast service without making the appropriate payment to the broadcast service provider.

Many encryption techniques make use of secret electronic keys to encrypt broadcast data so that the data can only be comprehended when decrypted using a specified key possessed by a subscriber. Some systems may provide many different broadcast services to many different subscribers, each of whom requires a unique secret key. For example, ten 128 bit keys may need to be delivered to each of ten million subscribers. Current systems for delivery of such keys include sending key cards to recipients via postal services, or transmitting the keys individually.

We have appreciated the need for a more efficient means of transmitting multiple keys and for storing multiple keys in a store.

### SUMMARY OF THE INVENTION

The invention is defined in the independent claims to which reference may now be made. Advantageous features of the invention are set forth in the appendant claims.

In an embodiment of the present invention, an electronic key for use in pay television systems is constructed from two parts, a mother portion and a daughter portion. A plurality of keys can be delivered by transmitting a single common mother portion and a plurality of unique daughter portions. A unique daughter portion is transmitted for each unique complete key that is required. The mother portion and plurality of daughter portions are received and each complete key is constructed by appending each one of the daughter portions to a copy of the mother portion.

In one exemplary embodiment, a mother portion comprising a 112 bit data packet, and nine daughter portions each comprising a 16 bit data packet may be transmitted. The mother portion and one daughter portion are transmitted together as a single 128 bit packet and the remaining eight 16 bit daughter portions are transmitted together as a second 128 bit packet. By appending each of the daughter portions to a copy of the mother portion, nine unique 128 bit keys are constructed from only two 128 bit data packets.

In a system embodying the invention, transmission of the key portions can be encrypted using any appropriate encryption algorithm such as the Advanced Encryption Standard (AES) algorithm. The algorithm is preferably a symmetric cryptographic transform so that given an output (the encrypted key), it is mathematically unfeasible to generate the input (the key portions) without knowledge of the key used to encrypt the data. This first condition provides security to the system. Additionally, the transform is preferably such that a small change in the input generates a large change in the output. This second condition ensures that when a change is made to only the daughter portion of a key, which may form only a small proportion of the whole key, security is maintained because the encrypted key will undergo a large change.

### BRIEF DESCRIPTION OF THE DRAWINGS

The preferred embodiment of the invention will now be described in more detail, by way of example, with reference to the accompanying drawings, in which:
**Figure 1** is a block diagram of the broadcast side;
**Figure 2** is a block diagram of a subscriber receiver system;
**Figure 3** is a schematic diagram of a mother portion and a single daughter portion;
**Figure 4** is a schematic diagram of a complete service key formed from the mother portion and daughter portion of Figure 3;
**Figure 5** shows one data structure that may be used to transmit a single mother portion and a plurality of daughter portions;
**Figure 6** is a schematic diagram of one configuration of the memory shown in Figure 2;
**Figure 7** is a schematic diagram of an alternative configuration of the memory shown in Figure 2.

### DETAILED DESCRIPTION OF THE PREFERRED EMBODIMENT

The embodiment of the present invention relates to delivery of digital content such as music, video or games, but in particular to pay-television systems in which a subscriber may receive and view television broadcasts in return for payment of a subscription charge. Television broadcasts are received in a scrambled form to prevent unauthorised recipients from viewing the broadcast service. The subscriber may descramble the television broadcast using an encryption key to decrypt encrypted control words (CW) used to scramble the broadcast. In the preferred embodiment, different encryption keys may be used to encrypt control words specific to different broadcast services, and a subscriber possesses the encryption keys associated with those broadcast services to which he is entitled. When encryption keys are specific to particular broadcast services, they may be conveniently referred to as service keys (SK).

To provide a plurality of service keys to subscribers, the service keys are transmitted over air and are themselves encrypted in accordance with a secret key (SCK) which is unique to, and known only to a particular subscriber. This encryption prevents others from intercepting broadcasts and illegitimately obtaining the service keys. The plurality of service keys are transmitted to, and received by the subscriber as a mother portion and a plurality of daughter portion encrypted in accordance with the secret key. The key portions are decrypted and a unique service key may be constructed by appending one of the unique daughter portions to a copy of the mother portion. In this way, it can be seen that a more efficient means of delivery of service keys is achieved.

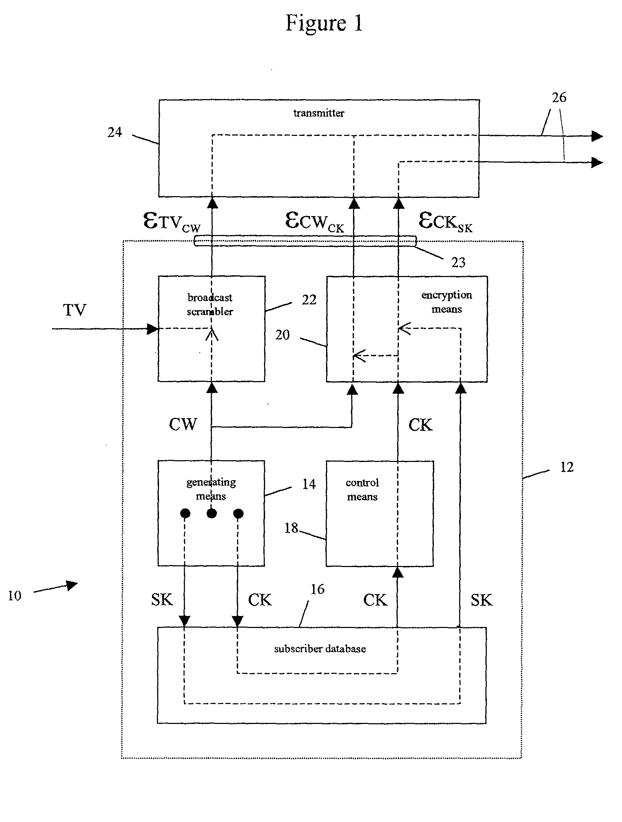

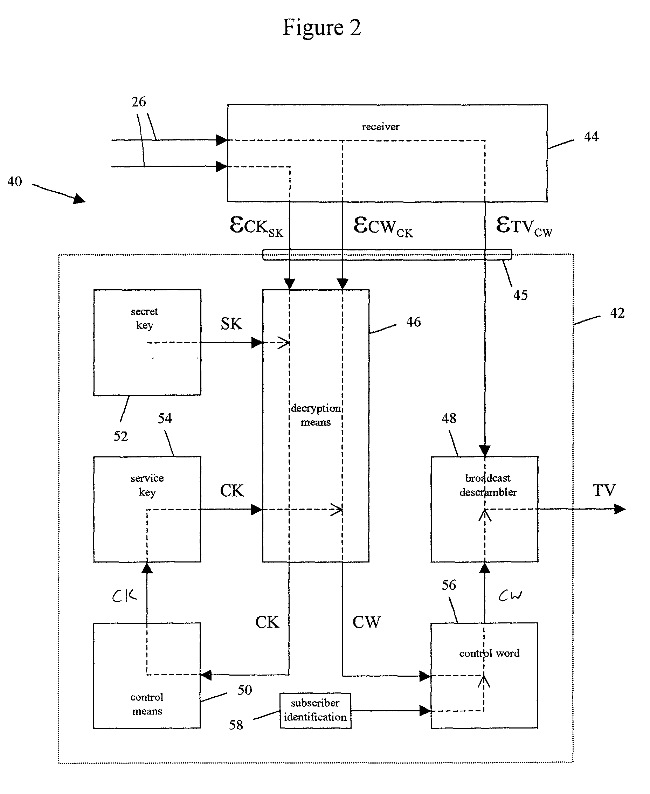

A pay television system embodying the invention as shown in Figure 1 comprises a broadcast side 10, and a subscriber side. The broadcast side 10 comprises a central computer 12 which handles subscriber management and data encryption, and a transmitter 24 to transmit broadcast signals 26 to the subscriber side. The subscriber side comprises at least one subscriber receiver system 40, each associated with an individual subscriber. Each subscriber receiver system 40 comprises a receiver 44 for receiving broadcast signals 26 transmitted from the broadcast side 10 and control means 50 to manage data and construct keys. Each subscriber receiver system 40 further comprises a first store or memory 54 to store service keys and a second memory 52 to store a secret key unique to that particular subscriber receiver system 40. Additionally, each subscriber receiver system 40 comprises a decryption means 46, here an AES circuit, to decrypt keys and other data, and a broadcast descrambler 48, here a DVB circuit, to descramble scrambled broadcast signals. Figure 1 is a block diagram of the broadcast side. Figure 2 is a block diagram of a subscriber receiver system.

It is understood that the various components of the system embodying the invention may be separate modules, but in the preferred embodiment, all the components of each of the subscriber receiver systems 40 (except for the receiver 44) are contained on a single monolithic semiconductor integrated circuit 42. Such a construction increases the security and integrity of the system since data cannot be intercepted within the system and components cannot easily be substituted with illegitimate replacements to try and circumvent security.

The central computer 12 comprises a subscriber database 16 which contains data corresponding to a group of subscribers. The subscriber database 16 includes information relating to those broadcast rights to which each subscriber is entitled, relevant personal details, credit data and subscriber identification codes. The subscriber database 16 also contains a plurality of secret keys, each of which is uniquely associated with a corresponding subscriber. Each secret key is used to uniquely encrypt and decrypt key portions and is known only to the broadcast side 10 and the corresponding subscriber. The central computer 12 also comprises generating means 14 such as a PRBS circuit arranged to generate a plurality of control words to scramble or descramble television broadcast signals, service keys to encrypt or decrypt control words, and secret keys to encrypt or decrypt service keys. A control means 18 is provided which is capable of retrieving data from the subscriber database 16, constructing data packets from key portions and controlling the various components of the broadcast side 10. An encryption means 20 is provided to encrypt keys and a broadcast scrambler 22 is provided to scramble broadcast signals.

The broadcast and reception of the television signals themselves can be according to any one of many regimes, such as analogue scrambling systems using line cut and rotate techniques, or digital systems using AES circuits to decrypt the television signals. Such systems are known to the skilled person. The pertinent part of the system embodying the invention is the transmission and storage of the keys by which television broadcasts may be rendered clear such as by decrypting the control words used to scramble the television broadcasts, and thus allow the television broadcasts to be descrambled. These keys are sent individually to each user, or to groups or all users in the system encrypted in a manner such that the keys themselves can only be decrypted by the authorised recipient or recipients.

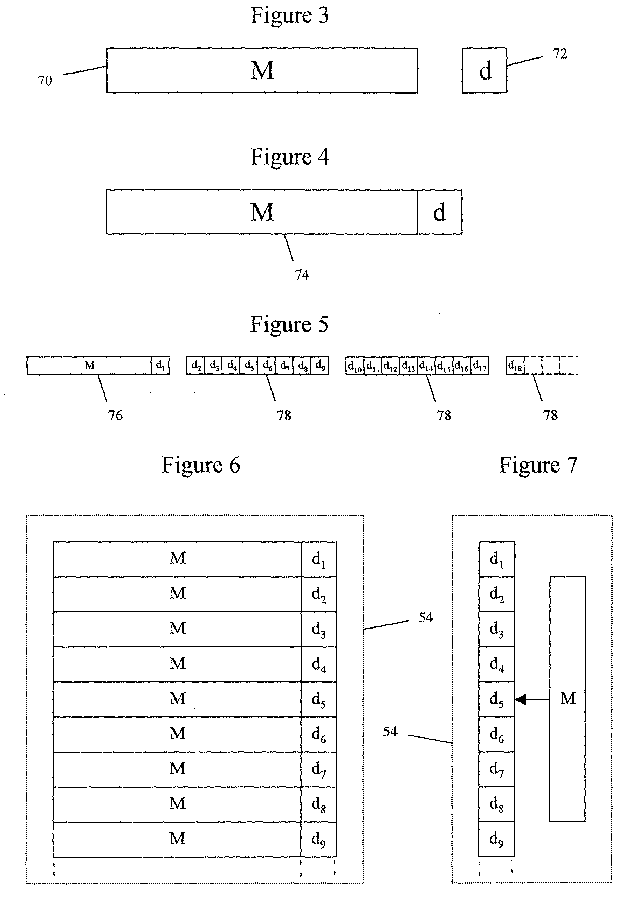

In the system, each key comprises a bit field and is formed in two parts, a mother or master portion 70, and a daughter or slave portion 72. The mother 70 and daughter 72 portions also comprise bit fields which may be appended to form a complete key 74. The mother portion 70 may be common to all subscribers entitled to a particular broadcast service, and the daughter portion 72 unique to each subscriber within that group. In the preferred embodiment a single mother portion is common to all subscribers within a group and each daughter portion is unique to a particular broadcast service. Preferably, the group of subscribers sharing a common mother portion is constituted of all the subscribers. In this embodiment, each subscriber possesses the common mother portion and a set of daughter portions which are representative of the services to which that subscriber is entitled. Since a daughter portion is common to a particular broadcast service and the mother portion is common to all subscribers, every subscriber entitled to that particular service will possess a common complete key. A complete key 74 formed from a mother portion 70 and a daughter portion 72 may alternatively be called a service key (SK) 74 to emphasise the fact that such a key is associated with a particular broadcast service, and to distinguish it from a secret key (SCK) used to encrypt or decrypt service keys. Figure 3 is a schematic diagram of a mother portion and a single daughter portion. Figure 4 is a schematic diagram of a complete service key formed from the mother portion and daughter portion of Figure 3.

The generating means 14 generates a mother portion common to all the subscribers in the subscriber database 16, and generates a daughter portion unique to each broadcast service provided by the broadcast service provider. The mother portion and each daughter portion are stored in the subscriber database 16 in association with the respective subscriber data. When a group of keys are to be sent to a particular subscriber or group of subscribers, the control means 18 accesses the subscriber database 16 and retrieves the mother portion common to all the subscribers and retrieves a daughter portion for each broadcast service to which a particular subscriber or group of subscribers is entitled. The secret key corresponding to the subscriber to whom the keys are being sent is also retrieved from the subscriber database 16. The mother portion, each daughter portion and the secret key are sent via a communication link to the encryption means 20 where the mother and daughter portions are encrypted using the secret key. The key portions may be encrypted separately and then appended to form a series of data packets suitable for transmission. Preferably, the keys are appended by the control means 18 in their unencrypted form first and the complete packets then encrypted. The keys are sent via a communication link and an output 23 to the transmitter 24 which transmits the encrypted key portions in a wireless manner to the plurality of subscriber receiving system 40 at the subscriber side.

The key portions may be encrypted using any appropriate encryption algorithm such as the Advanced Encryption Standard (AES) Algorithm. The encryption algorithm can be any symmetric cryptographic transform so that it is mathematically unfeasible to generate the input (the key portions) from the output (the encrypted key portions) without knowledge of the secret key used to encrypt the data. This condition ensures that only that subscriber entitled to receive the key portions by virtue of their possession of the correct secret key, can decrypt the encrypted keys. A subscriber can gain possession of a valid and unique secret key by making the appropriate subscription payment to the broadcast service provider. Additionally, the encryption algorithm should be one in which a small change in the input creates a large change in the output. This ensures that a change of only the daughter portion, which may constitute only a small proportion of the complete key, results in a large change in the encrypted key. Although a group of keys are related by virtue of a common mother portion, because the relationship between the encrypted and unencrypted keys is complex, it is unfeasible to obtain the unencrypted key portions without knowledge of the secret key used to encrypt the key portions.

In the preferred embodiment, the key portions are appended in such a way as to allow the mother portion to be transmitted together with a single daughter portion as a single data packet 76, and the remaining daughter portions to be transmitted in groups as a series of further data packets 78. The mother portion 70 may comprise for example a 112 bit data packet and each daughter portion 72 may comprise a 16 bit data packet. The 112 bit mother portion is then transmitted together with a single 16 bit daughter portion as a single 128 bit data packet. The remaining 16 bit daughter portion are transmitted in groups of eight as a plurality of 128 bit data packets. It is understood however, that the mother and daughter portions need not be of a particular size, and that they may be transmitted together in other groupings or individually. If the key portions are encrypted, the encrypted key portions may be appended and transmitted in a similar manner. Figure 5 shows one data structure that may be used to transmit a single mother portion and a plurality of daughter portions.

It is advantageous to transmit keys in packets comprising a plurality of key portions to increase the integrity of the system. If a daughter portion comprises a 16 bit data packet, is not possible to try 2^16 daughter portions to find a particular one as the daughter portions are transmitted in groups. If several daughter portions are transmitted as a 128 bit packet, a hacker would have to try all 2^128 encrypted composite daughter keys as the relationship between the encrypted and decrypted keys is so complex.

A receiver 44 at each subscriber receiver system 40 receives the broadcast signals 26 transmitted from the broadcast side 10 which are converted to digital signals and sent via an input 45 and a communication link to the decryption means 46. The decryption means 46 receives the encrypted mother portion and each encrypted daughter portion from the receiver 44 via a communication link and decrypts the key portions using a stored unique secret key 52. The key portions can only be decrypted if the stored secret key 52 corresponds to, or is complementary to the secret key used to encrypt the key portion at the broadcast side 10. Since any particular secret key is known only to one subscriber, then only that one subscriber can decrypt the encrypted keys to obtain the original key portions. A different subscriber with a different secret key can only obtain those key portions encrypted using their secret key. This process ensures that while all subscribers can receive the encrypted data, any one subscriber can only acquire the unencrypted key portions to those broadcast services to which they are entitled. Although keys are encrypted uniquely to every subscriber, those subscribers who have the same broadcast rights will end up with the same common mother and daughter portions after they are decrypted.

Decrypted key portions are sent via a communication link from the decryption means 46 to the control means 50. The control means 50 obtains the key portions from the plurality of received data packets and constructs a plurality of service keys by appending each of the daughter portions to a copy of the mother portion. The daughter portions may be inserted in any position within the mother portion but in the preferred embodiment the daughter portions are appended to the end of the mother portion. It can be seen that a unique complete service key may be constructed for each unique daughter portion. However, only a single mother portion need be transmitted resulting in a reduction in transmitted data.

The service keys are sent via a communication link from the control means 50 to the first memory 54 where the service keys are stored in a key table. The first memory 54 is arranged to store the mother key portion and the plurality of daughter key portions in such a manner that the mother key portion is associated with a group of daughter key portions. Figure 5 shows one format for the key table in which the first memory 54 is arranged to store each of the plurality of daughter portions in the table with a copy of the mother portion as a plurality of complete service keys. In this embodiment, when a service key is required it can be retrieved from the table in a complete form. In an alternative embodiment, the first memory 54 is arranged to store the plurality of daughter portions in a table so that the table is associated with the mother portion as shown in figure 6. In this embodiment, the service keys are constructed when they are required by retrieving the mother portion and the required daughter portion and appending the daughter portion to a copy of the mother portion.

Broadcast signals (TV) representative of for example a particular television program are scrambled at the broadcast side 10 by a broadcast scrambling circuit 22. The generating means 14 generates a series of control words which are sent via a communication link to the broadcast scrambler 22. The broadcast scrambler 22 receives the control words and the television broadcast signals, and scrambles the television broadcast signal according to the control words. In one embodiment, the service key corresponding to the broadcast service may be used as a seed for the algorithm used to generate the control words. The scrambled television signals are sent via a communication link to the transmitter 24. Additionally, the control words are sent from the generating means 14 to the encryption means 20 where they are encrypted according to the service key which corresponds to the broadcast service associated with the control words. The encrypted control words are sent via a communication link to the transmitter 24. The service key used to encrypt the control words comprises a mother portion which is common to all subscribers, and comprises a daughter portion which is unique to the broadcast service which the key is being used to encrypt. The scrambled broadcast signals and the encrypted control words are transmitted by the broadcast side 10 and are received at the subscriber side by each subscriber receiver system 40. The control words may be encrypted using any appropriate encryption algorithm using the complete service key corresponding to the particular service that the broadcast represents. This ensures that only those persons entitled to the broadcast service by virtue of their possession of a valid service key can decrypt the broadcast. A subscriber can gain possession of a valid service key by making the appropriate payment to the broadcast service provider.

On receipt of the encrypted control words and scrambled broadcast signals they are converted to digital signals. The scrambled broadcast signals are sent via a communication link to the broadcast descrambler 48 and the encrypted control words are sent via a communication link to the decryption means 46. The control means 50 comprises a control circuit arranged to retrieve a master key portion and a selected daughter key portions in response to a select signal and to construct a complete decryption key from the master key portion and selected daughter key portion. The control means 50 sends a command to the first memory 54 to transmit the appropriate key from the key table to the decryption means 46. The decryption means 46 comprises a decryption circuit for decrypting control words in association with a service key. The decrypted control words are sent via a communication link from the decryption means 46 to the broadcast descrambler 48. The broadcast descrambler 48 contains a descrambling circuit for descrambling broadcast signals in association with a series of control words using for example the common scrambling algorithm (CSA). The broadcast descrambler 48 circuit contains processing means capable of performing the appropriate algorithm corresponding to that which the broadcast side 10 used to scramble the broadcast. The broadcast descrambler 48 receives the scrambled broadcast and the control words and performs the descrambling algorithm to descramble the scrambled broadcast. In the preferred embodiment, a subscriber identification 58 is used to select one or more control words from a plurality of received control words. In this embodiment, the control words are stored in a table 56 after they are decrypted and the appropriate ones selected according to the subscriber identification 58 when required. The descrambled broadcast signals are then transmitted to a display unit such as a television set where the broadcast can be viewed by the subscriber.

In the foregoing description, a service key is used to decrypt control words which are in turn used to descramble television broadcast signals. However, the service key may alternatively be used to directly decrypt a television broadcast encrypted using that particular service key.

In the preferred embodiment, the mother portion provides the subscribers with an overall access right, whereas the daughter portions control the particular service rights. To prevent fraud, the mother portion can be changed periodically, requiring all subscribers to receive a valid update. A full subscriber with rights to access to all broadcast services will possess a full table of daughter portions. A lower rate subscriber may only possess a reduced number of daughter portions corresponding to the number of services to which he is entitled allowing him to construct only a limited number of valid keys for a limited number of channels. Entitlements to rights to a new service would be provided by sending the subscriber a new daughter portion from which he could construct the complete key used to decrypt that particular service.

To update a set of keys according to the present system, thus only requires the delivery of a set of daughter portions. Since a daughter portion is significantly smaller in size than a complete key, this results in a reduction in data that is required to be transmitted. For example, if the mother portion is common to all subscribers and each daughter portion is unique to a particular broadcast service, a mother portion need only be transmitted once and the subscriber entitlements can be updated by sending a group of daughter portions. Conversely, if the mother portion is common to a group of subscribers who are entitled to a particular service, then a mother portion need only be sent to the group once. To update each subscribers entitlements, each subscriber need only be sent a unique daughter portion.

## Claims

1. A semiconductor circuit for use in a system for receiving and decrypting broadcast signals using one of a selected plurality of complete decryption keys, comprising:
- an input (45) arranged to receive complete decryption keys broadcast as a master portion (70) and a plurality of daughter portions (72);
- a store (54) arranged to store the master portion and the plurality of daughter portions in such a manner that the master portion is associated with a group of daughter portions;
- a control circuit (50) arranged to retrieve the master portion and a selected one of the daughter portions in response to a select signal and to construct a complete decryption key (74) from the master portion and selected daughter portion; and
- a decryption circuit (46) for decrypting broadcast signals using the complete decryption key.

2. A system for transmitting and encrypting broadcast signals using one of a selected plurality of complete encryption keys (74), comprising:
- a circuit (14) arranged to generate a plurality of complete encryption keys each formed from a master portion (70) and one of a plurality of respective daughter portions (72) for use in encrypting broadcast signals;
- a transmitter circuit (24) arranged to transmit the master portion and the plurality of respective daughter portions to a receiver (44) from which the plurality of complete keys can be reconstructed.

3. A system for delivery of a plurality of complete encryption keys (74), comprising a broadcast side (10) and a subscriber side, wherein the broadcast side (10) comprises:
- a circuit (14) arranged to generate a plurality of complete encryption keys (74) formed from a master portion (70) and a plurality of respective daughter portions (72) for use in encrypting broadcast signals;
- a transmitter circuit (24) arranged to transmit the master portion and the plurality of respective daughter portions to the subscriber side;
and the subscriber side comprises at least one subscriber receiver systems (40), wherein each of the subscriber receiver systems comprises:
- a receiver circuit (44) arranged to receive the master portion and the plurality of respective daughter portions;
- a store (54) arranged to store the master key portion and the plurality of respective daughter key portions in such a manner that the master key portion is associated with the group of daughter key portions;
- a control circuit (50) arranged to retrieve the master key portion and a selected one of the daughter key portions in response to a select signal and to construct a complete decryption key (74) from the master key portion and selected daughter key portion; and
- a decryption circuit (46) for decrypting the broadcast signals using the complete decryption key.

4. The semiconductor circuit of claim 1, or the system of claim 3, wherein the store is arranged to store the plurality of daughter portions in a table and wherein the table is associated with the master portion.

5. The semiconductor circuit of claim 1, or the system of claim 3, wherein the store is arranged to store each of the plurality of daughter portions in a table with a copy of the master portion as a plurality of complete decryption keys.

6. The semiconductor circuit of claim 1, or the system of claim 2 or 3 wherein the master portion is a 112 bit data packet and each of the plurality of daughter portions is a 16 bit data packet.

7. The semiconductor circuit of claim 1, wherein the input is further arranged to receive a master portion and one daughter portion as a single 128 bit packet, and to receive a further plurality of daughter portions in groups of eight as a plurality of 128 bit packets.

8. The system of claim 2 or 3 wherein the transmitter circuit is arranged to transmit the master portion with one of the plurality of daughter portions as a single 128 bit packet, and to transmit the remaining daughter portions in groups of eight as a plurality of 128 bit packets.

9. The semiconductor circuit of claim 1, or the system of claim 2 or 3 wherein the broadcast signals are digital content including at least one of video, music or games.

10. The system of claim 2 or 3, further comprising encryption means (20) for retrieving a secret encryption key and encrypting the key portions in accordance with the secret key.

11. The semiconductor circuit of claim 1, or the system of claim 3, further comprising decryption means (46) for retrieving a secret encryption key and decrypting the key portions in accordance with the secret key.

12. The system of claim 3, wherein the subscriber side comprises one or more pay television set top boxes.

13. The semiconductor circuit of claim 1, or the system of claim 2 or 3 wherein the master portion is common to all subscribers and each of the daughter portions is unique to a particular broadcast service.

14. The semiconductor circuit of claim 1, or the system of claim 2 or 3 wherein the master portion is unique to a group of subscribers who are entitled to a particular broadcast service, and each of the daughter portions is unique to a particular subscriber in that group.

15. A set-top-box for use in a pay-television system comprising a semiconductor circuit according to claim 1, or any of claims 4 to 7, 9, 11, 13 or 14 when appendant claim 1.

16. A method of transmitting a plurality of complete decryption keys in a system in which complete decryption keys are used to decrypt broadcast signals, comprising:
- transmitting a master portion (70) of a decryption key; and
- transmitting a plurality of daughter portions (72);
- wherein the master portion and each daughter portion together comprise one of a plurality of complete decryption keys (74).

17. A method of receiving and storing a plurality of complete decryption keys from key portions used to decrypt broadcast signals, comprising:
- receiving a master portion (70) of a decryption key;
- receiving a plurality of daughter portions (72); and
- storing the master portion associated with the plurality of daughter portions such that the master portion is retrievable with a selected one of the plurality of daughter portions to form a complete decryption key (74).

18. A method of delivering and storing a plurality of complete decryption keys in a system in which complete decryption keys are used to encrypt and decrypt broadcast signals, comprising:
- transmitting a master portion (70) of a decryption key; and
- transmitting a plurality of daughter portions (72);
- wherein the master portion and each daughter portion together comprise one of a plurality of complete decryption keys (74).
- receiving the master portion of a decryption key;
- receiving the plurality of daughter portions; and
- storing the master portion associated with the plurality of daughter portions such that the master portion is retrievable with a selected one of the plurality of daughter portions to form a complete decryption key.

19. The method of claim 16, 17 or 18 wherein the master portion is a 112 bit data packet and each of the daughter portions is a 16 bit data packet.

20. The method of claim 16 or 18 wherein the master portion is transmitted simultaneously with one of the plurality of daughter portions as a single 128 bit packet, and the remaining daughter portions are transmitted in groups of eight as a plurality of 128 bit packets.

21. The method of claim 16 or 18, further comprising the steps of retrieving a secret key (52), and encrypting the key portions in accordance with the secret key.

22. The method of claim 17 or 18 wherein the step of storing the master and daughter portions comprises storing the plurality of daughter portions in a table and associating the master portion with the table.

23. The method of claim 17 or 18 wherein the step of storing the master and daughter portions comprises storing each one of the plurality of daughter portions in a table with a copy of the master portion as a plurality of complete decryption keys.

24. The method of claim 17 or 18, further comprising the steps of retrieving a secret key (52), and decrypting the key portions in accordance with the secret key.

25. The method of claim 16, 17 or 18 wherein the broadcast signals are digital content including at least one of video, music or games.

26. The method of claim 16, 17 or 18 wherein the master portion is common to all subscribers and each of the daughter portions is unique to a particular broadcast service.

27. The method of claim 16, 17 or 18 wherein the master portion is unique to a group of subscribers who are entitled to a particular broadcast service, and each of the daughter portions is unique to a particular subscriber in that group.
